Europäisches Patentamt

**European Patent Office**

**Office européen des brevets**

(11) Veröffentlichungsnummer: **0 266 647 B1**

# EUROPÄISCHE PATENTSCHRIFT

(45) Veröffentlichungstag der Patentschrift: **10.07.91**

(51) Int. Cl.⁵: **B25H 3/00**, B23Q 3/155

(21) Anmeldenummer: **87115659.2**

(22) Anmeldetag: **26.10.87**

(54) **Lager- und Transporteinheit zur Aufnahme von Bearbeitungswerkzeugen für Werkzeugmaschinen.**

(30) Priorität: **03.11.86 CH 4346/86**

(43) Veröffentlichungstag der Anmeldung:
**11.05.88 Patentblatt  88/19**

(45) Bekanntmachung des Hinweises auf die
Patenterteilung:
**10.07.91 Patentblatt  91/28**

(84) Benannte Vertragsstaaten:
**AT BE CH DE ES FR GB IT LI NL SE**

(56) Entgegenhaltungen:
**DE-A- 2 135 240      DE-A- 2 140 214**
**DE-A- 2 703 367      DE-A- 3 146 452**
**DE-A- 3 217 728      DE-U- 8 520 123**

**MACHINES PRODUCTION, Nr. 438, 29. April
1986, Seiten 55-61, Paris, FR; "Makino: un
atelier flexible au point"**

(73) Patentinhaber: **Starrfräsmaschinen AG**
**Seebleichestrasse 61**
**CH-9400 Rorschacherberg(CH)**

(72) Erfinder: **Novak, Peter**
**Oberstrasse 16**
**CH-8274 Tägerwilen(CH)**

(74) Vertreter: **EGLI-EUROPEAN PATENT ATTOR-**
**NEYS**
**Horneggstrasse 4**
**CH-8008 Zürich(CH)**

## Beschreibung

Die Erfindung betrifft eine Lager- und Transporteinheit zur Aufnahme von Bearbeitungswerkzeugen für Werkzeugmaschinen, insbesondere Bearbeitungszentren, welche Einheit ortsbeweglich ausgebildet ist und zur Lagerung der Bearbeitungswerkzeuge innerhalb und ausserhalb der Werkzeugmaschinen und zum Transport derselben zu den Werkzeugmaschinen und zurück dient.

Bei Werkzeugmaschinen, insbesondere numerisch gesteuerten Werkzeugmaschinen und Bearbeitungszentren, stellt sich das Problem, die für die Bearbeitung von Werkstücken benötigten Werkzeuge so bereitzustellen, dass ein Bearbeitungsablauf mit möglichst kleinen Leerzeiten gewährleistet ist. Hierzu ist es bekannt, die Werkzeuge in einem der Werkzeugmaschine zugeordneten Werkzeugspeicher unterzubringen, von wo sie in einer vorgegebenen Programmfolge mittels eines Handhabungsgerätes in die Werkzeugmaschine eingesetzt und nach dem Einsatz wieder in den Speicher zurückgebracht werden.

Jeder Werkzeugspeicher weist eine bestimmte Speicherkapazität auf, die durch seine Konstruktion gegeben ist. Die darin untergebrachte Anzahl Werkzeuge ist gewöhnlich so gross, dass die Zahl der Werkzeuge für die Bearbeitung einer grossen Anzahl von Werkstücken ausreicht. Trotzdem ergeben sich immer wieder Fälle, bei denen die Zahl der Bearbeitungswerkzeuge nicht ausreicht und deshalb zusätzlich Werkzeuge eingesetzt werden müssen. Diese können auf verschiedene Art zur Verfügung gestellt werden, beispielsweise durch Auswechseln einzelner Werkzeuge im Werkzeugspeicher manuell oder mittels eines Belade- und Entladearms oder durch teilweises oder vollständiges Auswechseln der Werkzeuge des Werkzeugspeichers.

Eine mindestens teilweise Neubelegung der Werkzeugplätze eines Werkzeugspeichers ist aber auch dann erforderlich, wenn die Bearbeitung eines neuen Werkstückes aufgenommen wird.

Die Werkzeuge sind gewöhnlich zentral gelagert und werden dort vorbereitet und zusammengestellt. Für den Transport zu den Werkzeugmaschinen werden Transporteinheiten eingesetzt, in denen die Werkzeuge in einer bestimmten Reihenfolge angeordnet sind. Die Werkzeuge werden mittels dieser Transporteinheiten zu den einzelnen Werkzeugmaschinen gebracht, wobei die Transporteinheiten auch als Lagereinheit dienen kann.

Es bleibt jedoch nach wie vor das Ziel, die Speicherkapazität des der Werkzeugmaschine zugeordneten Werkzeugsspeichers so gross zu halten, dass praktisch alle vorkommenden Bearbeitungsoperationen für ein Werkstück ohne weiteren Werkzeugwechsel ausgeführt werden können. Bei den bekannten Werkzeugspeichern ist jedoch eine Erhöhung der Speicherkapazität mit erheblichem Aufwand verbunden. Bei Tellermagazinen werden mehrere Tellerscheiben übereinander und bei Ketten-Magazinen Parallel-Ketten nebeneinander angeordnet. Eine weitere Lösung besteht darin, dass die Bestückung des Speichers durch einen Portallader vorgenommen wird. Mit diesen Massnahmen wird zwar eine Erhöhung der Speicherkapazität erreicht, jedoch ist damit entweder ein grosser zusätzlicher Zeit- und Platzbedarf und/oder eine aufwendige Konstruktion erforderlich.

Der Erfindung liegt die Aufgabe zugrunde, eine Lager- und Transporteinheit der eingangs beschriebenen Art so auszugestalten, dass diese Einheit nicht nur für den Transport und die Lagerung von Werkzeugen, sondern auch als Zusatzspeicher für einen Werkzeugspeicher einsetzbar ist.

Diese Aufgabe wird gemäss der Erfindung dadurch gelöst, dass die Bearbeitungswerkzeuge in Werkzeugmagazinen gelagert sind, welche in paralleler, nebeneinanderliegender Anordnung in einem Rahmengestell der Lager- und Transporteinheit gelagert sind und an mindestens einem ihrer Enden mit einem Fahrwerk aus gerüstet sind.

Ein Ausführungsbeispiel der Erfindung ist in der Zeichnung dargestellt und nachfolgend beschrieben. Es zeigen:

Fig. 1 eine schematisch dargestellte Lager- und Transporteinheit in räumlicher Darstellung, in deren Innenraum Werkzeugmagazine mit Bearbeitungswerkzeugen angeordnet sind,

Fig. 2 eine schematische Darstellung eines Werkzeugmagazines in räumlicher Darstellung, in welchem eine Reihe Werkzeuge gelagert sind,

Fig. 3 eine schematische Darstellung der Lager- und Transporteinheit nach Fig. 1 in räumlicher Darstellung, welche mit einem Sockel ausgerüstet ist,

Fig. 4 einen schematisch dargestellten Grundriss zur Erläuterung des Beladens eines Speichers einer Werkzeugmaschine aus Lager- und Transporteinheiten nach Fig. 1,

Fig. 5 einen schematisch dargestellten Grundriss zur Erläuterung des Entladens eines Werkzeugspeichers einer Werkzeugmaschine in Lager- und Transporteinheiten nach Fig. 1 und

Fig. 6 einen schematisch dargestellten Werkzeugkreislauf mittels Lager- und Transporteinheiten nach Fig. 1.

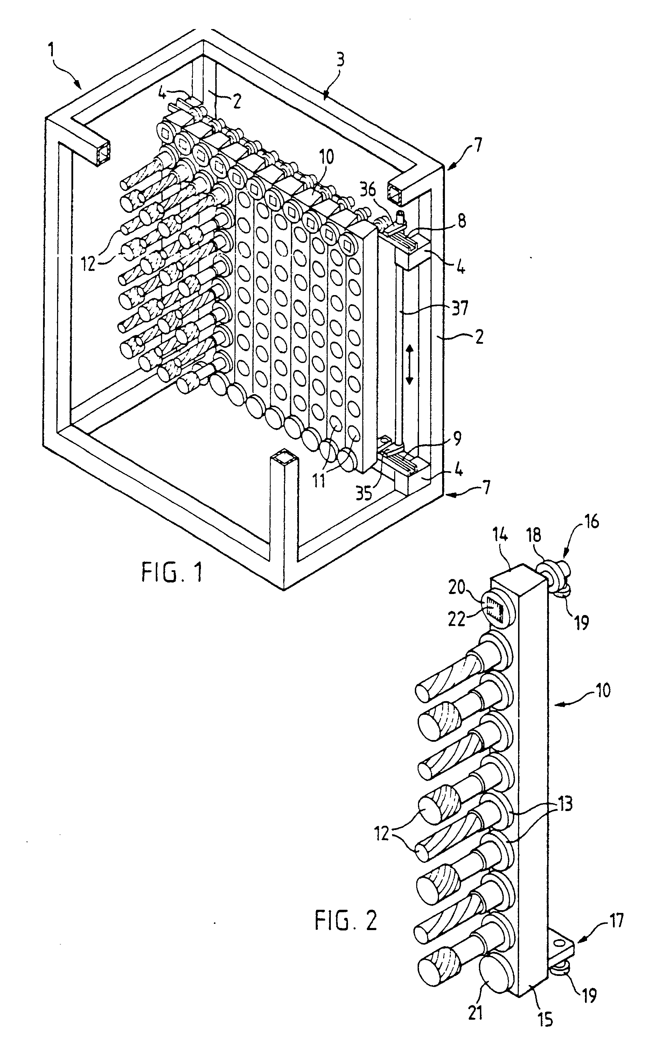

Die in Fig. 1 dargestellte Lager- und Transporteinheit besteht im wesentlichen aus einem Rahmengestell 1, welches aus Stäben 2, beispielsweise 4-Kantrohren zusammengesetzt ist, die miteinander verbunden, beispielsweise verschweisst, sind. An einem der das Rahmengestell 1 bildenden Rahmen 3 sind Sockel 4 auf der Innenseite zweier paralleler Stäbe 2 befestigt. Zwei gegenüberliegende Sockel 4 sind mit Abstand von einem Knotenpunkt 7 befestigt, während die anderen beiden Sockel 4 unmittelbar am Knotenpunkt 7 anliegen. Das vom Knotenpunkt 7 mit Abstand angeordnete Sockelpaar trägt eine erste Fahrbahn 8, während das andere an Knotenpunkten 7 anliegende Sockelpaar eine zweite Fahrbahn 9 trägt. Die erste und zweite Fahrbahn 8, 9 kann, siehe Fig. 1, als U-Profil ausgebildet sein.

In den Fahrbahnen 8, 9 sind Werkzeugmagazine 10 abgestützt, wie anhand von Fig. 2 im Detail beschrieben wird.

Das in Fig. 2 dargestellte Werkzeugmagazin 10 ist als länglicher Kasten ausgebildet, welcher eine Reihe nebeneinanderliegender Oeffnungen 11, siehe Fig. 1, aufweist, welche als formschlüssige Aufnahme für Werkzeuge 12, welche meistens mit Werkzeughaltern 13 zusammengebaut sind, ausgebildet sind. Auf der den Werkzeugen 12 abgewandten Seite sind an den Enden 14, 15 des Werkzeugmagazines 10 Fahrwerke 16, 17 angeordnet. Das Fahrwerk 16 weist eine Laufrolle 18 und eine Rollenführung 19, z.B. mit einer einfachen oder Tandem-Führungsrolle auf, während das Fahrwerk 17 nur die Rollenführung 19 aufweist. Das Werkzeugmagazin 10 ist somit mit den Fahrwerken 16, 17 an den Fahrbahnen 8, 9 aufgehängt und damit verfahrbar.

An den Enden 14, 15 des Werkzeugmagazines 10 sind werkzeugseitig Griffscheiben 20, 21 angeordnet, mit welchen die Werkzeugmagazine 10 durch Belade- und Entladevorrichtungen gefasst und verschoben werden können. Die Stirnseiten der Griffscheiben 20, 21 können als Träger für die Codierung der Daten der Werkzeuge eines Werkzeugmagazines 10 und ihrer Destination verwendet werden. In Fig. 2 ist hierfür auf der Stirnseite der Griffscheibe 20 ein Codeträger 22 befestigt.

Die Werkzeugmagazine 10 sind gemäss Fig. 1 in vertikaler Lage nebeneinanderliegend mit ihren Fahrwerken 16, 17 in den Fahrbahnen 8, 9 gelagert, die zweckmässig gegen die Belade- und Entladeseite abwärts geneigt sind. Sie können transporttauglich fixiert werden, damit sie während des Transportes in ihrer Lage gehalten sind. Diese Anordnung der Werkzeugmagazine 10 erlaubt es, die Rahmengestelle 1 derart zu lagern und zu transportieren, dass sie je nach Bedarf vertikal oder horizontal liegen. Die Fixierung der Werkzeugmagazine 10 erfolgt mittels Sperrklinken 35, 36, die an einer Hubstange 37 befestigt und manuell oder mittels einer Hubvorrichtung betätigbar sind, welch letztere z.B. einer Belade- und Entladevorrichtung zugeordnet ist. Die Fixierung kann jedoch auch in anderer Weise, z.B. mittels Arretierbolzen oder Fixierstangen, erfolgen.

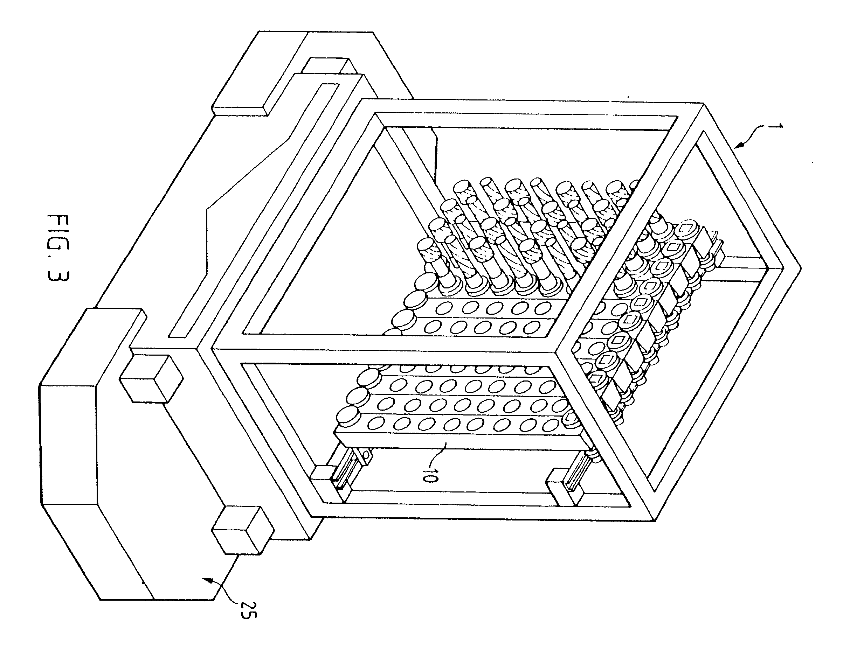

In Fig. 3 ist das Rahmengestell 1 mit Werkzeugmagazinen 10 beladen und wird für Transportzwecke mit einem Transportsockel 25 versehen. Der Transportsockel 25 kann eine unterschiedliche Ausführung aufweisen.

In Fig. 3 ist das Rahmengestell 1 mit vertikal aufgehängten Werkzeugmagazinen 10 auf den Transportsockel 25 gestellt und mit diesem fest verbunden. Der Transportsockel kann beispielsweise Laufrollen (nicht sichtbar) aufweisen, mittels welcher das Rahmengestell 1 auf Schienen verfahrbar ist. Der Transportsockel 25 kann auch eine Palette, z.B. eine bekannte Standard-Palette, sein, welche das Rahmengestell 1 trägt und mit welcher das Rahmengestell 1 durch ein Flur-Förder-Fahrzeug, beispielweise durch einen Hubstapler, transportiert und an Uebergabestellen auf- und abgeladen werden kann. Aber auch Krane, Rollschemel und Schienenfahrzeuge können hierzu verwendet werden.

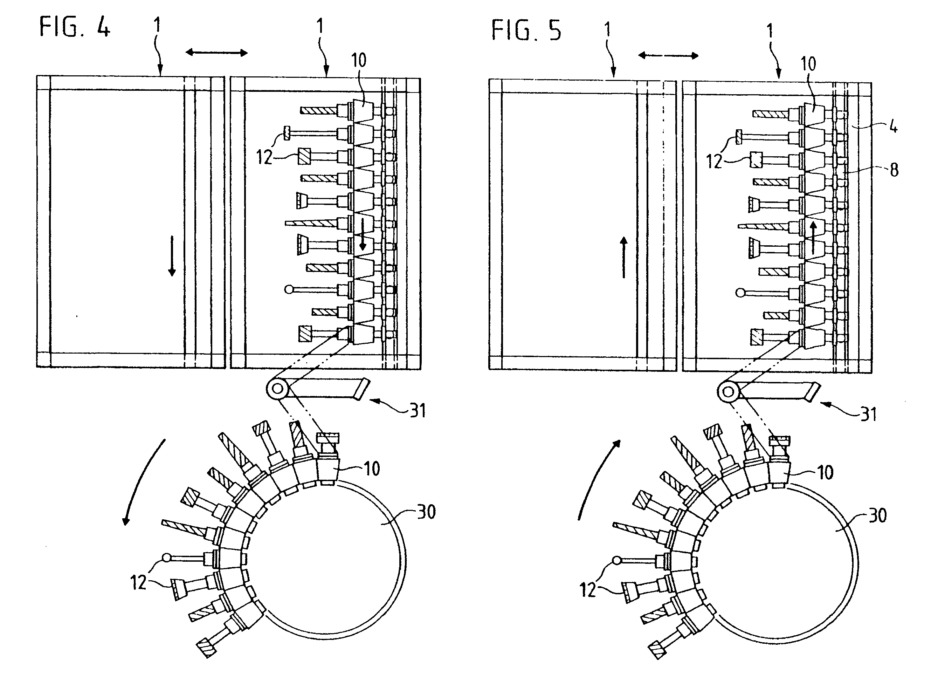

In Fig. 4 und 5 ist die Uebergabe von Werkzeugmagazinen 10 aus einem Rahmengestell 1 in einem Werkzeugspeicher 30 und die Rücknahme von Werkzeugmagazinen 10 aus demselben in das Rahmengestell 1 dargestellt.

Fig. 4 zeigt das Bestücken des Werkzeugspeichers 30, wie er in dem vorstehend erwähnten Patent beschrieben ist, mit einer Anzahl von mit Werkzeugen 12 versehenen Werkzeugmagazinen 10. Hierzu werden soviele Rahmengestelle 1 an den Werkzeugspeicher 30 gebracht, wie Werkzeugmagazine 10 im Speicher 30 benötigt werden. Die Werkzeugmagazine 10 werden mittels einer Uebergabevorrichtung 31 magazinweise dem Rahmengestell 1 entnommen und an den Speicher 30 übergeben. In Fig. 4 sind die Werkzeugmagazine 10 eines ersten Rahmengestelles 1 auf den Speicher übergeben worden, so dass nun die Uebergabevorrichtung 31 die Werkzeugmagazine 10 des nächsten Rahmengestelles 1 entnehmen und an den Werkzeugspeicher 30 übergeben kann.

In ähnlicher Weise erfolgt auch die Rücknahme der Werkzeugmagazine 10 in die Rahmengestelle 1 durch die Uebergabevorrichtung 31.

In Fig. 5 ist das eine Rahmengestell 1 bereits mit zurückgenommenen Werkzeugmagazinen 10 belegt, das nun weggefahren werden kann und dem nächsten leeren Rahmengestell 1 Platz macht, damit durch die Uebergabevorrichtung 31 die restlichen Werkzeugmagazine 10 zurückgegeben werden können. Es können aber auch nur selektiv die Werkzeugmagazine mit benützten Werkzeugen durch die Uebergabevorrichtung 31 in das Rahmengestell 1 zurückgegeben werden.

Bei der Uebergabe und Rücknahme von Werkzeugmagazinen 10 wird der Vorteil der Verwendung dieser Magazine besonders deutlich sichtbar: das Bestücken des Werkzeugspeichers 30 kann in sehr kurzer Zeit erfolgen und trotzdem wird eine grosse Zahl von Werkzeugen 12 bereitgestellt.

Die beschriebene, aus dem Rahmengestell und den Werkzeugmagazinen 10 bestehende Lager- und Transporteinheit stellt eine sehr flexible Lösung der Werkzeugbereitstellung und des Werkzeugtransportes dar und kann an die verschiedensten Verhältnisse angepasst werden. Hierbei können die Lager- und Transporteinheiten während des ganzen Werkzeug-Umlaufes benützt werden, während welchem alle für den Einsatz der Werkzeuge erforderlichen Operationen durchgeführt werden können. Durch die Werkzeugmagazine 10, in welchen die Werkzeuge 12 formschlüssig gehalten sind, kann auch die Codierung der Werkzeuge vereinfacht werden.

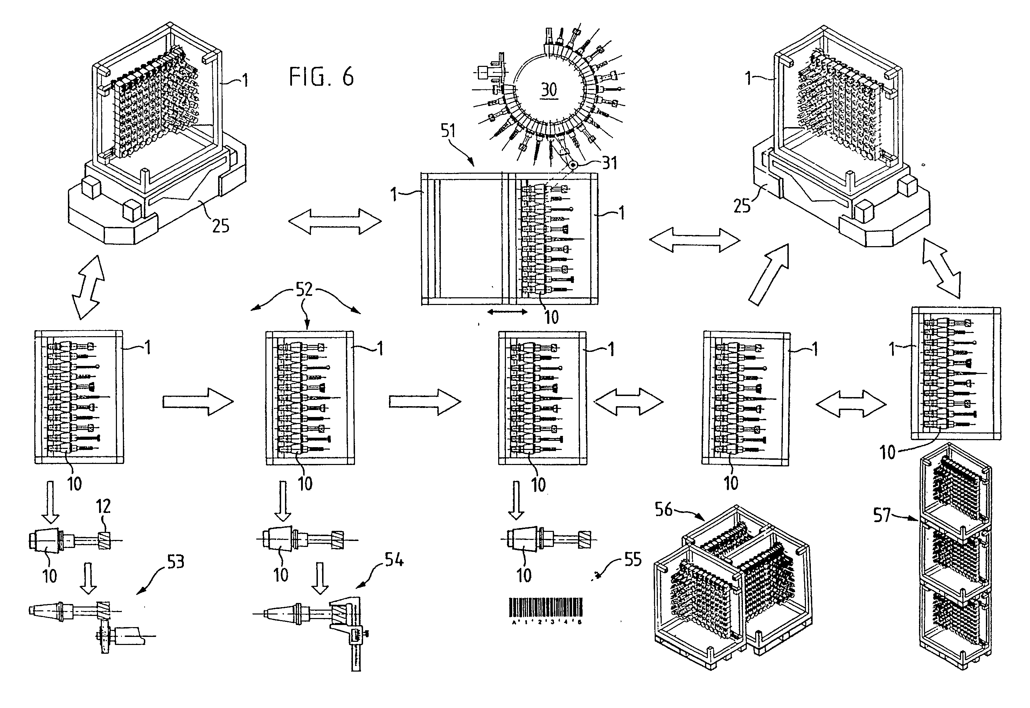

Der in Fig. 6 dargestellte Kreislauf für Bearbeitungswerkzeuge von Werkzeugmaschinen zeigt eine Anwendungsmöglichkeit der Lager- und Transporteinheit. Mit 51 ist die Speicherstation einer Werkzeugmaschine schematisch dargestellt. Sie umfasst den Werkzeugspeicher 30 der Werkzeugmaschine mit der Belade- und Entladevorrichtung 31. Zwei Rahmengestelle 1 dienen hier als Vorlage und als Zusatzspeicher für die Werkzeugmagazine 10.

Die Lager- und Transporteinheit mit einem Rahmengestell 1 und einem Transportmittel 25, z.B. einem Rollwagen, wird zur Station 52 gefahren, in welcher das Nachschärfen, die Voreinstellung, die Codierung und das Zusammenstellen der Werkzeuge erfolgt.

In der Schärferei 53 werden die Werkzeuge 12 einzeln aus den Werkzeugmagazinen 10 herausgenommen, nachgeschärft und wieder in das Magazin 10 eingesetzt. Dieses erhält eine neue Codierung und wird anschliessend in das Rahmengestell eingeladen.

Da die Werkzeugmagazine 10 ein eigenes Fahrwerk besitzen, können sie an eine Fahrschiene gehängt und auf diese Weise durch die Station 52 transportiert werden. Hierbei können sie gegebenenfalls auch leicht in die horizontale Lage geschwenkt werden.

Am Voreinstellplatz 54 werden die nachgeschärften Werkzeuge auf den Sollwert voreingestellt. Sie können aber auch für einen neuen Werkzeugsatz voreingestellt werden. Die voreingestellten Werkzeuge werden direkt in ein Werkzeugmagazin 10 geladen und in einem Rahmengestell 1 gruppiert.

In der Codierstelle 55 werden die Werkzeuge bezeichnet, wobei verschiedene, bekannte Codierungen verwendbar sind.

Nach der Codierung erfolgt das Zusammenstellen der Werkzeuge, wobei sie in den Rahmengestellen 1 gruppiert werden. Dabei können die Werkzeuge nicht nur beliebig innerhalb der Magazine angeordnet werden, sondern auch die Magazine selbst können in ihrer Reihenfolge im Rahmengestell variiert werden. Die Zuordnung im Rahmengestell 1 ist durch die entsprechende Platzbelegung im Werkzeugspeicher 30 gegeben. Damit kann eine Zugriffsoptimierung schon bei der Bereitstellung erreicht werden. Nach Verlassen der Station 52 erfolgt entweder der mit 58 bezeichnete Rücktransport der Lager- und Transporteinheiten. Es kann aber auch mit diesen Einheiten zuerst ein Pufferlager 56 gebildet werden, was wegen der dichten Anordnung der Werkzeuge in den Rahmengestellen 1 ermöglicht wird. Die Lager- und Transporteinheiten können jedoch auch in einem Lager 57 gestapelt werden. Für eine Langzeitlagerung können die Werkzeugmagazine 10 in einem Lager in gleicher Weise wie in den Rahmengestellen 1 auf entsprechend langen Fahrbahnen 8, 9 gelagert werden.

Im Rahmen der Erfindung sind auch Varianten denkbar. So können die Rahmengestelle 1 mit aussenliegenden Fahrbahnen 8, 9 ausgeführt werden. Diese Ausführung kommt vor allem zur Lagerung von Werkzeugen in stationären Werkzeuglagern in Frage. Für den Transport sind die Rahmengestelle nach Fig. 1 besonders geeignet, da dadurch die Werkzeuge geschützt sind. Weiter können die Rahmengestelle 1 auch zusammen mit Paletten gestapelt werden, wobei die Werkzeugmagazine 10 sowohl in vertikaler als auch in horizontaler Lage angeordnet sein können.

## Ansprüche

1. Lager- und Transporteinheit zur Aufnahme von Bearbeitungswerkzeugen für Werkzeugmaschinen, insbesondere Bearbeitungszentren, welche Einheit ortsbeweglich ausgebildet ist und zur Lagerung der Bearbeitungswerkzeuge und zum Transport derselben zu den Werkzeugmaschinen und zurück dient, dadurch gekennzeichnet, dass die Bearbeitungswerkzeuge (12) in Werkzeugmagazinen (10) gelagert sind, welche in paralleler, nebeneinanderliegender Anordnung in einem Rahmengestell (1) der Lager- und Transporteinheit gelagert sind und an mindestens einem ihrer Enden (14, 15) mit einem Fahrwerk (16, 17) ausgerüstet sind.

2. Lager- und Transporteinheit nach Anspruch 1, dadurch gekennnzeichnet, dass die Werkzeugmagazine (10) in vertikaler oder horizontaler Anordnung in dem Rahmengestell (1) angeordnet sind.

3. Lager- und Transporteinheit nach Anspruch 1 oder 2, gekennzeichnet durch eine Vorrichtung, welche eine hängende Anordnung der Werkzeugmagazine (10) im Rahmengestell (1) erlaubt.

4. Lager- und Transporteinheit nach Anspruch 3, dadurch gekennzeichnet, dass die Vorrichtung eine im Innenraum oder an der Aussenseite des Rahmengestells (1) verlegte Fahrbahn (8, 9) zur Aufnahme der Fahrwerke (16, 17) mehrerer Werkzeugmagazine (10) aufweist.

5. Lager- und Transporteinheit nach Anspruch 4, dadurch gekennzeichnet, dass die Fahrbahn (8, 9) mit einer Neigung, z.B. gegen die Belade- und Entladeseite, versehen ist.

6. Lager- und Transporteinheit nach einem der Ansprüche 1 bis 5, dadurch gekennzeichnet, dass die Werkzeugmagazine (10) mit zwei Fahrwerken (16, 17) ausgerüstet sind, von denen je eines an den Enden (14, 15) der Werkzeugmagazine angeordnet ist, wobei die Fahrwerke (16, 17) auf zwei Fahrbahnen (8, 9) abgestützt und auf denselben verfahrbar sind.

7. Lager- und Transporteinheit nach einem der Ansprüche 1 bis 6, dadurch gekennzeichnet, dass die Werkzeugmagazine (10) transporttauglich verriegelbar sind, z.B. durch Sperrmittel (35, 36, 37).

8. Lager- und Transporteinheit nach einem der Ansprüche 1 bis 7, dadurch gekennzeichnet, dass ein, beispielsweise fahrbarer Sockel, vorgesehen ist, mit welchem das Rahmengestell (1), beispielsweise durch eine Schnellkupplung, verbindbar ist.

9. Lager- und Transporteinheit nach einem der Ansprüche 1 bis 8, dadurch gekennzeichnet, dass das Rahmengestell (1) als ein Offener, aus Stäben (2) zusammengesetzter Bauteil ausgebildet ist.

10. Lager- und Transporteinheit nach einem der Ansprüche 1 bis 9, dadurch gekennzeichnet, dass die Einheit als Zusatzspeicher eines einer Werkzeugmaschine zugeordneten Werkzeugspeichers (30) einsetzbar ist, welcher mit denselben Werkzeugmagazinen wie die im Rahmengestell (1) verwendeten Werkzeugmagazine (10) belegbar ist.

11. Lager- und Transporteinheit nach Anspruch 10, gekennzeichnet durch eine an dem Werkzeugspeicher (30) angeordnete Belade- und Entladevorrichtung (31) zur Uebergabe der Werkzeugmagazine (10) von dem Rahmengestell (1) und zur Zurücknahme derselben zum Rahmengestell zurück.

## Claims

1. Storage and transport unit for receipt of machining tools for machine tools, particularly machining centres, which unit is constructed movably and for storage of machining tools and for transport of the same to the machine tool and back, characterised in that the machining tools (12) are stored in tool magazines (10) which are stored in parallel adjacently lying arrangement in a framework (1) of the storage and transport unit and are provided at at least one of their ends (14, 15) with running gear (16, 17).

2. Storage and transport unit according to Claim 1, characterised in that the tool magazines (10) are arranged in vertical or horizontal arrangement in the framework (1).

3. Storage and transport unit according to Claim 1 or 2, characterised by an apparatus which permits a hanging arrangement of the tool magazine (10) in the framework (1).

4. Storage and transport unit according to Claim 3, characterised in that the apparatus has a track (8, 9) set in the interior space or on the outer side of the framework (1) for receiving the running gear (16, 17) of several tool magazines (10).

5. Storage and transport unit according to Claim 4, characterised in that the track (8, 9) is provided with an inclination, e.g. towards the loading and unloading side.

6. Storage and transport unit according to one of Claims 1 to 5, characterised in that the tool magazines (10) are provided with two running gears (16, 17) of which, in each case, one is arranged at the ends (14, 15) of the tool magazine, wherein the running gear (16, 17) is supported on two tracks (8, 9) and can be moved on the same.

7. Storage and transport unit according to one of Claims 1 to 6, characterised in that the tool magazines (10) are lockable during transportation, e. g. by locking means (35, 36, 37).

8. Storage and transport unit according to one of Claims 1 to 7, characterised in that a base, for example a movable one, is provided with which the framework (1) can be connected, for example by a rapid coupling.

9. Storage and transport unit according to one of Claims 1 to 8, characterised in that the framework (1) is constructed as an open component put together of bars (2).

10. Storage and transport unit according to one of Claims 1 to 9, characterised in that the unit can be set as an additional store of a tool store (30) arranged relative to a machine tool which can be loaded with the same tool magazines as the tool magazines (10) used in the framework (1).

11. Storage and transport unit according to Claim 10, characterised by a loading and unloading apparatus (31) arranged on the tool store (30) for transfer of the tool magazines (10) from the framework (1) and for return of the same back to the framework (1).

**Revendications**

1. Unité de stockage et de transport destinée à recevoir des outils d'usinage pour machines-outils, notamment des centres d'usinage, laquelle unité est conçue mobile et sert au stockage des outils d'usinage et au transport de ceux-ci jusqu' aux machines-outils et retour, caractérisée en ce que les outils d'usinage (12) sont montés dans des magasins d'outils (10) qui sont stockés, parallèles et juxtaposés, dans un châssis (1) de l'unité de stockage et de transport et sont équipés d'un dispositif de déplacement (16, 17), à l'une de leurs extrémités (14, 15) au moins.

2. Unité de stockage et de transport selon la revendication 1, caractérisée en ce que les magasins d'outils (10) sont disposés verticalement ou horizontalement dans le châssis (1).

3. Unité de stockage et de transport selon la revendication 1 ou 2, caractérisée par un dispositif qui permet de suspendre les magasins d'outils (10) dans le châssis (1).

4. Unité de stockage et de transport selon la revendication 3, caractérisée en ce que le dispositif comporte une voie de déplacement (8, 9), située à l'intérieur ou sur le côté extérieur du châssis (1), en vue de recevoir les mécanismes de déplacement (16, 17) de plusieurs magasins d'outils (10).

5. Unité de stockage et de transport selon la revendication 4, caractérisée en ce que la voie de déplacement (8, 9) présente une pente, par exemple inclinée vers le côté de chargement et de déchargement.

6. Unité de stockage et de transport selon l'une des revendications 1 à 5, caractérisée en ce que les magasins d'outils (10) sont équipés de deux mécanismes de déplacement (16, 17) dont chacun est situé à l'une des extrémités (14, 15) des magasins d'outils, les mécanismes de déplacement (16, 17) prenant appui sur deux voies de déplacement (8, 9) et étant déplaçables sur celles-ci.

7. Unité de stockage et de transport selon l'une des revendications 1 à 6, caractérisée en ce que les magasins d'outils (10) peuvent être verrouillés pour le transport, par exemple par des moyens de blocage (35, 36, 37).

8. Unité de stockage et de transport selon l'une des revendications 1 à 7, caractérisée en ce qu'il est prévu un socle, par exemple déplaçable, par lequel le châssis (1) peut être relié, par exemple, par un raccord rapide.

9. Unité de stockage et de transport selon l'une des revendications 1 à 8, caractérisée en ce que le châssis (1) est un élément couvert, constitué de barreaux (2).

10. Unité de stockage et de transport selon l'une des revendications 1 à 9, caractérisée en ce que l'unité peut être utilisée comme stockeur supplémentaire d'un stockeur d'outils (30) associé à une machine-outil, lequel peut recevoir les mêmes magasins d'outils que les magasins d'outils (10) utilisés dans le châssis (1).

11. Unité de stockage et de transport selon la revendication 10, caractérisée par un dispositif de chargement et de déchargement (31), placé sur le stockeur d'outils (30), destiné au transfert des magasins d'outils (10) à partir du châssis (1) et à la reprise de ceux-ci sur le châssis.

FIG. 1

FIG. 2

FIG. 3

FIG. 4

FIG. 5

EP 0 266 647 B1

FIG. 6